# EUROPEAN PATENT SPECIFICATION

(11) **EP 3 232 877 B1**
(45) Date of publication and mention of the grant of the patent: **29.01.2020**
(21) Application number: 15808415.2
(22) Date of filing: 14.12.2015
(51) Int. Cl.: A47J 31/44

(54) **BEVERAGE MACHINE WITH SELF-POSITIONING CUP-SUPPORT**
GETRÄNKEMASCHINE MIT SELBSTEINSTELLENDEM BECHERHALTER
MACHINE DE BOISSONS AVEC SUPPORT DE TASSE À POSITIONNEMENT AUTOMATIQUEMENT

(30) Priority: 18.12.2014 EP 14198715
(43) Date of publication of application: 25.10.2017
(73) Proprietor: Société des Produits Nestlé S.A., 1800 Vevey (CH)
(72) Inventor: GRANGER, Eric, 1005 Lausanne (CH); MAZZA, Pietro, 10131 Torino (IT); CAHEN, Antoine, 1005 Lausanne (CH)
(74) Representative: Schnyder, Frank Simon
(86) International application number: PCT/EP2015/079568
(87) International publication number: WO 2016/096707

(56) References cited:
- WO-A1-2013/186339
- WO-A1-2014/127848

## Description

### Field of the Invention

The field of the invention pertains to beverage dispensing machines having a cup support. For instance, the machines use capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavoring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage serving or a plurality of beverage servings.

### Background Art

Certain beverage preparation machines use capsules containing ingredients to be extracted or to be dissolved; for other machines, the ingredients are stored and dosed automatically in the machine or else are added at the time of preparation of the drink.

Most beverage machines possess within a housing: filling means that include a pump for liquid, usually water, which pumps the liquid from a source of water that is cold or indeed heated through heating means, such as a heating resistor, a thermoblock or the like, a brewing unit in which an ingredient is brewed with water or a mixing unit in which ingredients are mixed together, and a beverage outlet for dispensing the prepared beverage. Examples of fluid circuits are disclosed in US 2,715,868, 5,392,694, 5,943,472, 5,992,298, 6,554,588, WO 2006/032599, WO 2009/024500, WO 2009/150030 and WO 2010/006953.

Usually, the beverage outlet is located above a grid for supporting a cup or other recipient under the outlet and for the passage of possible drips from the beverage outlet or other spills into a collector tray located under the grid. Examples of such machines are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313 and WO 2013/186339.

### Summary of the Invention

An objective of the invention is to provide a solution or at least an alternative to the prior art systems. A particular object of the invention is to provide a simple, reliable and/or inexpensive assembly and disassembly arrangement between a beverage preparation module and a cup support.

The invention thus relates to machines for dispensing a beverage from a beverage outlet to cups, for instance to cups of different sizes, in particular to short cups, e.g. espresso cups, and tall cups such as mugs, e.g. cappuccino cups. The machine may be configured to prepare beverages from capsules.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

The beverage preparation machine can be an in-home or out of home machine. The machine may be a coffee, tea, chocolate, cacao, milk, soup, baby food, etc... preparation machine. The machine may be arranged for preparing within a beverage processing module a beverage by passing hot or cold water or another liquid through a capsule containing an ingredient, such as a flavoring ingredient, of the beverage to be prepared, such as ground coffee or tea or chocolate or cacao or milk powder.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage.

For instance, a predetermined amount of beverage is formed and dispensed on user-request, which corresponds to a serving. The volume of such a serving may be in the range of 25 to 200 ml or up to 300 or 400 ml, e.g. the volume for filling a cup or mug, depending on the type of beverage. Formed and dispensed beverages may be selected from ristrettos, espressos, lungos, cappuccinos, cafe latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

In particular, the invention relates to a beverage preparation machine that comprises a beverage preparation module having a front face with an outlet for dispensing a prepared beverage. For instance, the module is configured to circulate a liquid e.g. water from a liquid reservoir to the outlet.

Further details on suitable reservoirs are for example disclosed in WO2007/135136, WO 2010/128109, WO 2011/083103, WO 2011/089210 and EP 2 228 633. Beverage outlet configurations are for instance disclosed in WO 2009/043630, WO 2012/072758 and WO 2013/127907.

Alternatively, the module can be connected directly to the tap that serves as a source of liquid, e.g. water.

The module can include at least one of a liquid driver, a thermal conditioner and a beverage mixing cavity e.g. a chamber controlled by an actuator for receiving a beverage ingredient via an ingredient passage. The ingredient may be mixed in the chamber with the liquid to prepare the beverage. Such an ingredient may be provided within a capsule.

Examples of modules that handle an ingredient contained in a capsule are disclosed in EP 1 646 305, EP 1 859 713, EP 1 859 714, WO 2009/043630, WO 2012/025258 and WO 2013/127476 and the references cited therein.

Examples of modules provided with a fluid circuit including a thermal conditioner and/or a liquid driver are disclosed in EP 1 253 844, EP 1 380 243 and EP 1 809 151, WO 2009/074550, WO 2009/130099, WO 2009/150030, WO 2010/108700, WO 2011/107574 and WO 2013/098173.

Typically, the module is provided with an external housing and/or a user-interface, e.g. an on-off switch and/or a beverage preparation selector.

The machine further comprises a cup support located under the outlet. The cup support is configured for placing a cup under the outlet. For instance, the cup support is removable from under the outlet to permit a placement on a placement surface in front of the front face under the outlet of a mug that is larger (typically taller) than the above cup. The placement surface for the mug may be formed by a support external to the machine or by a foot of the machine, e.g. a foot extending under the cup support when the cup support is located under the outlet.

Such an external support can be a kitchen or dining table or any generally stable and horizontal surface that is able to support the weight of the beverage preparation machine and the mug.

Such a principle is for example disclosed in WO 2013/104636 and WO 2013/186339. WO2014/127848 A1 discloses a beverage making machine with a cup support.

The cup support has a rear face removably assembled to the front face by a mechanical connector arrangement that comprises a front hook on the front face disassemblable from a corresponding rear hook on the rear face. The rear hook has a retaining element and the front hook has a retaining element. The retaining elements are mutually engaged when the cup support is assembled to the front face and disengaged when the cup support is disassembled from the front face.

In accordance with the invention, the rear hook with its retaining element generally extends in cross-section along two converging directions and the front hook with its retaining element generally extend in cross-section along two correspondingly converging directions, so as to facilitate self-positioning of the rear hook relative to the front hook when the cup support is assembled to the front face.

The converging directions may be converging upwardly or converging sideways. For instance, the directions are converging upwardly for allowing a vertical assembly and disassembly of the cup support and the front face or the directions are converging sideways for allowing a horizontal assembly and disassembly of the cup support and the front face.

Each pair of directions, i.e. the two directions of the rear hook and the two directions of the front hook, can be contained in a straight or curved virtual plane. The planes may be upright or at an angle thereto.

The converging directions may be straight and/or arched. Each two converging directions of the rear hook and the front hook can be in a generally symmetric or assymmetric u- or v-arrangement, such as a generally semi-circular arrangement, semi-elliptic arrangement or an arrangement of two intercepting arch segments forming generally a gothic arch.

The retaining element of the rear hook may extend generally in parallel to the rear face and the retaining element of the front hook may extend generally in parallel to the front face, so that the rear face and the front face are relatively slid in parallel one over another to move the retaining elements:
- together from disengagement into mutual engagement to assemble the rear face to the front face; and
- apart from mutual engagement into disengagement to disassemble the rear face from the front face.

The rear hook can be recessed in the rear face and the front hook may project out of the front face, or vice versa.

The machine's module may comprise: a main module bearing the outlet; and a service unit having a unit face that is part of said front face. The main module can have a seat into which the service unit is insertable and from which the service unit is removable, e.g. for emptying or filling or cleaning the unit, the unit face bearing the front hook. The outlet can extend from an outlet face that is part of the front face such as an outlet face that is generally flush with the unit face when the unit is in the module seat. The module seat may form a cavity in the main module for receiving the service unit.

The service unit may be arranged to be removed from the module seat by pulling the cup support when assembled to the front face.

The front hook can form a grip for removing the service unit from the module seat. For instance, the grip generally extends:
a) along a u- or v-shape;
b) along a virtual plane that is offset and parallel to the unit face;
c) about at least part of a seizure cavity, such as a seizure cavity delimited by a bottom that is recessed relative to the unit face; or
d) according to a combination of at least two of features a) to c).

The grip may include an edge that extends in a direction that is generally opposite to the retaining element of the front hook.

The service unit may comprise a liquid tank for supplying liquid that is circulated towards the outlet by the preparation module.

The service unit can include a waste collector. For instance, the collector comprises at least one of: a cavity for collecting solid waste material e.g. a used ingredient; and a cavity for collecting liquid waste material e.g. residual beverage and/or liquid draining from the main module.

Examples of service units provided with at least one of a cavity for collecting solid waste material and a cavity for collecting liquid water material are disclosed in WO 2009/074559, WO 2009/135869, WO 2010/128109, WO 2011/086087 and WO 2011/086088.

The cup support can include a liquid collection receptacle supporting a removable cup placement platform. For instance, the placement platform has at least one through-passage for evacuating liquid to the collection receptacle from above the platform when placed above the receptacle. Typically, the platform comprise an arrangement for draining liquid through the platform, such as a grid-like arrangement.

The liquid collection receptacle may comprise the rear face and the rear hook.

The platform can have a peripheral part and the collection receptacle may be delimited by at least one upright peripheral sidewall forming a seat for placing the platform. The peripheral part may extend over and above the peripheral sidewall when the platform is placed in the seat so that the platform is seizable at the peripheral part adjacent the peripheral sidewall by a user-hand for removing the platform from the receptacle. For instance, the peripheral part extends over and above and beyond the peripheral sidewall.

Hence, with this configuration, to remove the platform from the liquid collector, the user has neither to turn the cup support upside down nor to seize the platform by sticking a finger into a larger opening in the platform. Hence, the risk of unwanted exposure to residual liquid in the receptacle of the cup support or on the platform of the cup support can be minimised.

The peripheral part may include at least two seizable edges that are located generally opposite to one another across the platform.

The peripheral part can comprise one or more seizable edges that extend around the entire platform.

Hence, the platform may be seized by a user-hand from opposite edges of the platform. Such opposite edges may be spaced by a distance of 5 to 20, e.g. 7 to 15 cm, to allow safe single-handed seizure of the platform.

The receptacle and the platform may have an arrangement for fastening the receptacle and the platform together, such as at least one of:
- a magnetic fastener, e.g. the receptacle having one or more permanent magnets and the platform comprising a ferromagnetic material or vice versa, such as a permanent magnet made of iron, nickel, cobalt, rare earth metals, e.g. lanthanide, and alloys and oxides containing such metals as well as polymers (e.g. plastics) carrying such elements and components and/or a ferromagnetic material made of at least one of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe, alternatively both the receptacle and the platform being fitted with permanent magnets;
- a friction fastener, e.g. the peripheral sidewall forming a rim and the peripheral part having one or more lower edges extending inside and/or outside the peripheral rim and tightening the peripheral part to the sidewall by friction;
- a screw fastener, e.g. the platform forming a screw cap on the receptacle;
- a hook fastener; and
- a bayonet fastener.

The fastening arrangement should be sufficient to provide a stable fastening of the platform and the receptacle, typically maintaining the platform and the receptacle together when turned upside down. The fastening arrangement should however be manually unfastenable without undue burden by any ordinary consumer.

The peripheral part may have a lower edge forming a hook and the upright peripheral sidewall can have an upper edge forming a hook, the lower edge hook and the upper edge hook being hooked together when the platform is placed in the seat.

The peripheral sidewall may have a plurality of spaced apart hooks and the peripheral part can have a plurality of spaced apart hooks, the hooks being hooked together when the platform is placed in the seat.

The peripheral sidewall can form a rim into which or around which the hook of the peripheral part extends for being hooked to the upper edge hook, the hooks being arranged to be unhooked by urging the lower edge of the peripheral part towards a middle part of the platform or by urging the peripheral sidewall towards a middle part of the receptacle. For instance, the lower edge of the peripheral part extends downwardly from the platform and/or upwardly from the rim when the hooks are hooked together.

In the context of the present disclosure, the relative orientation of the machine and parts thereof, e.g. references to the machine's top, front, bottom, side, rear, etc., unless specified otherwise, typically relate to the orientation of operation of the machine, e.g. on top of a table, with the machine in front of a user for naturally operating the machine to dispense a beverage.

### Brief Description of the Drawings

The invention will now be described with reference to the drawings, in which:
- Figure 1 is a perspective view of a beverage machine according to the invention having a main module, a service unit and a cup support;
- Figure 2 illustrates the machine of Fig. 1 in which the main module is separated from the service unit and the a cup support;
- Figure 3 is a magnified view of part of the main module with the service unit of Fig. 1 after removal of the cup support;
- Figure 4 is a magnified view of part of the service unit of Fig. 3;
- Figure 5 is a perspective view of the cup support of the machine of Fig. 1, the cup support having a removable placement platform assembled to a liquid collection receptacle;
- Figure 6 is a view from a different perspective of part of the cup support of Fig. 5;
- Figure 7 is a perspective view of the cup support of Fig. 5 in which the platform is separated from the receptacle; and
- Figure 8 is a magnified view of part of the cup support of Fig. 5 illustrating the fastening between the platform and the receptacle.

### Detailed description

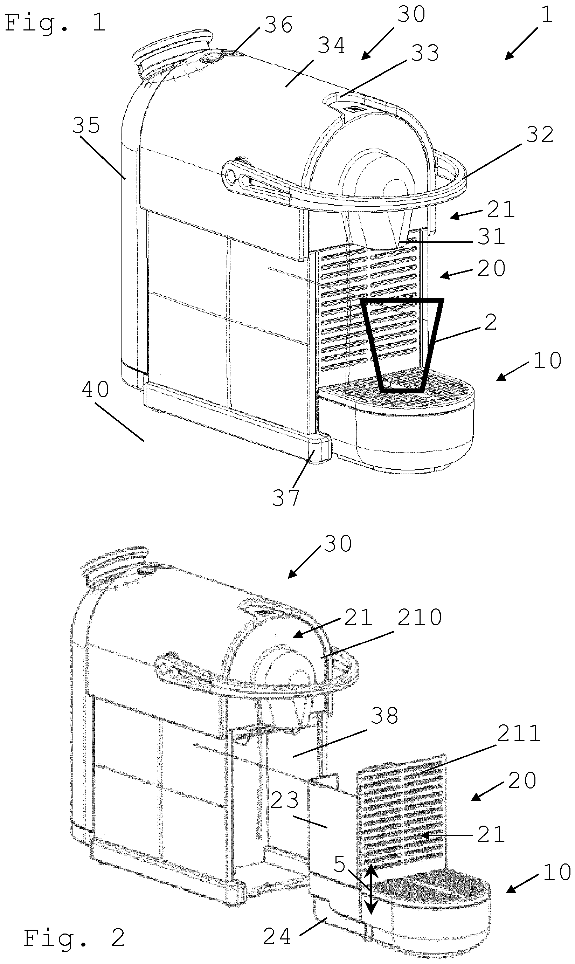

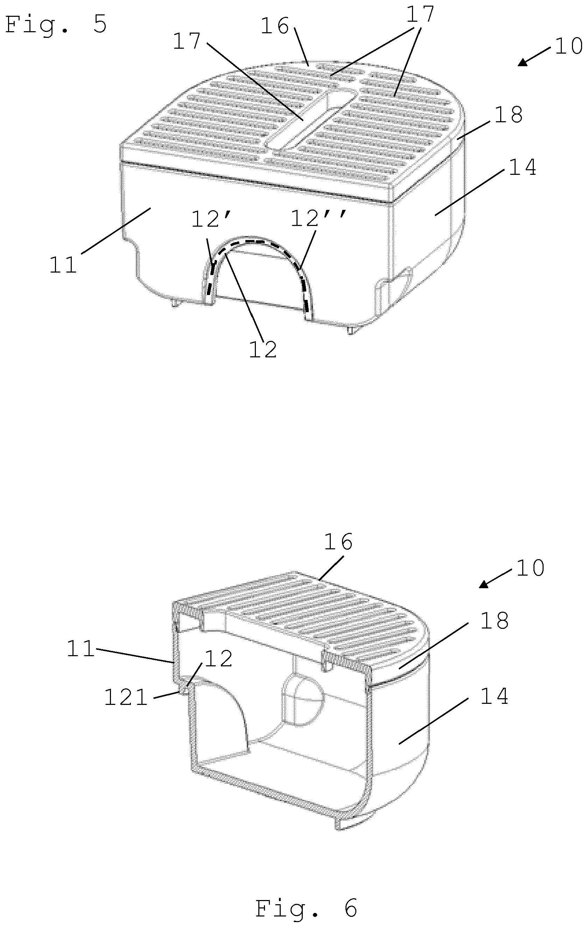

Figures 1 to 8 illustrate an exemplary embodiments of a beverage machine 1 according to the present invention. Possible non-limiting alternatives are also indicated by way of example in the following description.

Machine 1 comprises a beverage preparation module 20,30 having a front face 21 with an outlet 31 for dispensing a prepared beverage.

Module 20,30 may be provided with an external housing 34 and/or a user-interface 36.

Machine 1 can be electrically powered, typically by the mains, via an electric cord.

Module 20,30 can be configured to circulate a liquid e.g. water from a liquid reservoir 35 to outlet 31. For instance, module 20,30 includes at least one of a liquid driver, a thermal conditioner and a beverage mixing cavity, e.g. a chamber, controlled by an actuator 32. The mixing cavity may be configured for receiving a beverage ingredient via an ingredient passage 33 and for mixing the ingredient with the liquid to prepare the beverage. The ingredient may be provided within a capsule.

As illustrated in Fig. 1, machine 1 includes a cup support 10 located under outlet 31 for placing a cup 2 (schematically indicated) under the outlet 31.

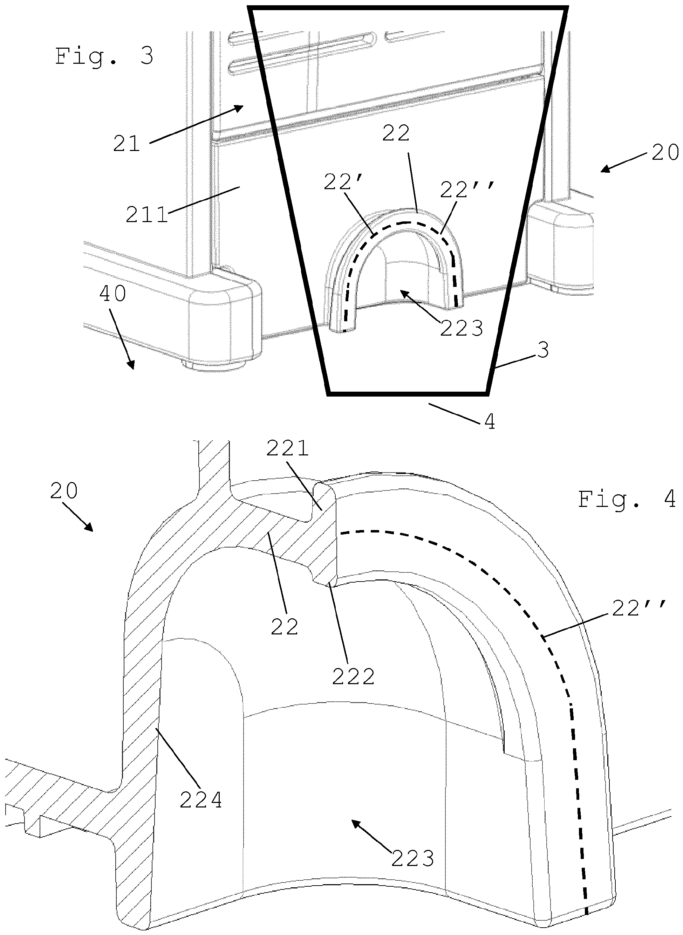

For instance, cup support 10 is removable from under outlet 31 to permit a placement on a placement surface 4 in front of front face 21 under outlet 31 of a mug 3 (schematically indicated) that is larger than cup 2 as illustrated in Fig. 3.

Placement surface 4 can be formed by a support 40 external to machine 1 or by a foot of machine 1, e.g. a foot extending under cup support 10 when located under outlet 31.

Cup support 10 has a rear face 11 removably assembled to front face 21 by a mechanical connector arrangement 12,22 that comprises a front hook 22 on front face 21 disassemblable from a corresponding rear hook 12 on rear face 11. Rear hook 12 has a retaining element 121 and front hook 22 has a retaining element 221, retaining elements 121,221 being mutually engaged when cup support 10 is assembled to front face 21 and disengaged when cup support 10 is disassembled from front face 21.

In accordance with the invention, rear hook 12 with its retaining element 121 generally extends in cross-section along two converging directions 12',12" and front hook 22 with its retaining element 221 generally extend in cross-section along two correspondingly converging directions 22',22'', so as to facilitate self-positioning of rear hook 12 relative to front hook 22 when cup support 10 is assembled to front face 21. See Figs 3 to 6.

Converging directions 12',12'',22',22'' can be converging upwardly or converging sideways, such as converging upwardly or sideways for allowing a vertical or a horizontal assembly and disassembly of cup support 10 and front face 21.

Each pair of directions 12',12'';22',22'', i.e. the two directions 12',12'' of rear hook 12 and the two directions 22',22'' of front hook 22, can be contained in a straight or curved virtual plane. The planes may be upright or at an angle thereto.

Converging directions 12',12'',22',22'' may be straight and/or arched. Each two converging directions 12',12'',22',22'' of rear hook 12 and front hook 22 can be in a generally symmetric or assymmetric u- or v-arrangement, such as a generally semi-circular arrangement, semi-elliptic arrangement or an arrangement of two intercepting arch segments forming generally a gothic arch.

Retaining element 121 of rear hook 12 may extend generally in parallel to rear face 12 and retaining element 221 of front hook 22 may extend generally in parallel to front face 21, so that rear face 11 and front face 21 are relatively slid in parallel one over another (arrow 5 in Fig. 2) to move retaining elements 121,221:
- together from disengagement into mutual engagement to assemble rear face 11 to front face 21; and
- apart from mutual engagement into disengagement to disassemble rear face 11 from front face 21.

Rear hook 12 can be recessed in rear face 11 and front hook 22 can project out of front face 21, or vice versa.

Module 20,30 may include: a main module 30 bearing outlet 31; and a service unit 20 having a unit face 211 that is part of front face 21.

Main module 30 can have a seat 38 into which service unit 20 is insertable and from which service unit 20 is removable, e.g. for emptying or filling or cleaning unit 20, unit face 211 bearing front hook 22.

Outlet 31 may extend from an outlet face 210 that is part of front face 21, such as an outlet face 210 that is generally flush with unit face 211 when unit 20 is in module seat 38.

Module seat 38 may form a cavity in main module 30 for receiving service unit 20.

Service unit 20 can be arranged to be removed from module seat 38 by pulling cup support 10 when assembled to front face 21.

Front hook 22 can form a grip 221,222 for removing service unit 20 from module seat 38, such as a grip 221,222 generally extending:
a) along a u- or v-shape 22',22'';
b) along a virtual plane that is offset and parallel to the unit face 211;
c) about at least part of a seizure cavity 223 such as a seizure cavity delimited by a bottom 224 that is recessed relative to unit face 211; or
d) according to a combination of at least two of features a) to c).

Grip 221,222 may include an edge 222 that extends in a direction that is generally opposite to retaining element 221 of front hook 22.

Service unit 20 may comprise a liquid tank for supplying liquid that is circulated towards outlet 31 by preparation module 20,30.

Service unit 20 may include a waste collector 23,24, such as a collector comprising at least one of:
- a cavity 23 for collecting solid waste material e.g. a used ingredient; and
- a cavity 24 for collecting liquid waste material e.g. residual beverage and/or liquid draining from main module 30.

Cup support 10 can comprise a liquid collection receptacle 14 supporting a removable cup placement platform 16. For instance, placement platform 16 has at least one through-passage 17 for evacuating liquid to collection receptacle 14 from above platform 16 when placed above receptacle 14. Liquid collection receptacle 14 may include rear face 11 and rear hook 12.

Platform 16 can have a peripheral part 18 and collection receptacle 14 may be delimited by at least one upright peripheral sidewall 15 forming a seat 15' for placing platform 16, peripheral part 18 extending over and above peripheral sidewall 15 when platform 16 is placed in seat 15' so that platform 16 is seizable at peripheral part 18 adjacent peripheral sidewall 15 by a user-hand for removing platform 16 from receptacle 14. For instance, peripheral part 18 extends over and above and beyond peripheral sidewall 15.

Peripheral part 18 may include at least two seizable edges 18',18'';18''',18'''' that are located generally opposite to one another across platform 16.

Peripheral part 18 can have one or more seizable edges 18',18'',18''',18'''' that extend around the entire platform 16.

Receptacle 14 and platform 16 can have an arrangement for fastening receptacle 14 and platform 16 together, such as at least one of:
- a magnetic fastener, e.g. the receptacle having one or more permanent magnets and the platform comprising a ferromagnetic material or vice versa, alternatively both the receptacle and the platform being fitted with permanent magnets;
- a friction fastener, e.g. peripheral sidewall 15 forming a rim and peripheral part 18 having one or more lower edges extending inside and/or outside the peripheral rim and tightening peripheral part 18 to sidewall 15 by friction;
- a screw fastener, e.g. platform 16 forming a screw cap on receptacle 14;
- a hook fastener; and
- a bayonet fastener.

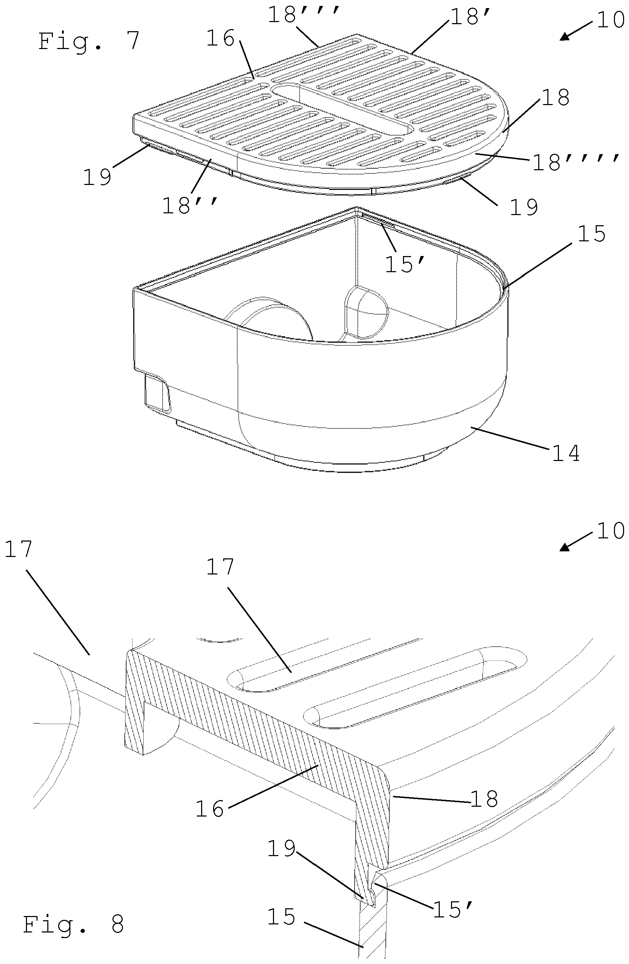

Peripheral part 18 can have a lower edge forming a hook 19 and upright peripheral sidewall 15 may have an upper edge forming a hook 15', lower edge hook 19 and upper edge hook 15' being hooked together when platform 16 is placed in the seat 15'. Peripheral sidewall 15 may have a plurality of spaced apart hooks 15' and peripheral part 18 may have a plurality of spaced apart hooks 19, hooks 15',19 being hooked together when platform 16 is placed in seat 15'. See Figs 7 and 8.

Peripheral sidewall 15 may form a rim into which (or around which) hook(s) 19 of peripheral part 13 extend(s) for being hooked to upper edge hook 15'. Hooks 15',19 can be arranged to be unhooked by urging the lower edge of peripheral part 18 towards a middle part of the platform 16 (or by urging the peripheral sidewall towards a middle part of the receptacle).

The lower edge of peripheral part 18 may extend downwardly from platform 16 and/or upwardly from the rim when hooks 15',19 are hooked together.

## Claims

1. A beverage preparation machine (1) comprising:
- a beverage preparation module (20,30) having a front face (21) with an outlet (31) for dispensing a prepared beverage, optionally the module (20,30) being configured to circulate a liquid e.g. water from a liquid reservoir (35) to the outlet (31), such as a module (20,30) comprising at least one of a liquid driver, a thermal conditioner and a beverage mixing cavity e.g. a chamber controlled by an actuator (32) for receiving a beverage ingredient, e.g. an ingredient provided within a capsule, via an ingredient passage (33) and for mixing said ingredient with said liquid to prepare said beverage, such as a module (20,30) provided with an external housing (34) and/or a user-interface (36); and
- a cup support (10) located under the outlet (31) for placing a cup (2) under the outlet (31), optionally the cup support (10) being removable from under the outlet (31) to permit a placement on a placement surface (4) in front of the front face (21) under the outlet (31) of a mug (3) that is larger than said cup (2), such as a placement surface (4) that is formed by a support (40) external to said machine (1) or by a foot of said machine, e.g. a foot extending under the cup support (10) when located under the outlet (31),
the cup support (10) having a rear face (11) removably assembled to the front face (21) by a mechanical connector arrangement (12,22) that comprises a front hook (22) on the front face (21) disassemblable from a corresponding rear hook (12) on the rear face (11), the rear hook (12) having a retaining element (121) and the front hook (22) having a retaining element (221), the retaining elements (121,221) being mutually engaged when the cup support (10) is assembled to the front face (21) and disengaged when the cup support (10) is disassembled from the front face (21),
**characterised in that** the rear hook (12) with its retaining element (121) generally extends in cross-section along two converging directions (12',12'') and the front hook (22) with its retaining element (221) generally extend in cross-section along two correspondingly converging directions (22',22''), so as to facilitate self-positioning of the rear hook (12) relative to the front hook (22) when the cup support (10) is assembled to the front face (21).

2. The machine of claim 1, wherein the converging directions (12',12'',22',22'') are:
- converging upwardly or converging sideways, such as converging upwardly or sideways for allowing a vertical or a horizontal assembly and disassembly of the cup support (10) and the front face (21); and/or
- converging within straight or curved virtual planes, each said two directions (12',12'';22',22'') being contained in such a straight or curved virtual plane, the planes being optionally generally upright or at an angle thereto.

3. The machine of claim 1 or 2, wherein the converging directions (12',12'',22',22'') are straight and/or arched, each two converging directions (12',12'',22',22'') of the rear hook (12) and the front hook (22) being optionally in a generally symmetric or assymmetric u- or v-arrangement, such as a generally semi-circular arrangement, semi-elliptic arrangement or an arrangement of two intercepting arch segments forming generally a gothic arch.

4. The machine of any preceding claim, wherein the retaining element (121) of the rear hook (12) extends generally in parallel to the rear face (12) and wherein the retaining element (221) of the front hook (22) extends generally in parallel to the front face (21), so that the rear face (11) and the front face (21) are relatively slid in parallel one over another to move the retaining elements (121,221):
- together from disengagement into mutual engagement to assemble the rear face (11) to the front face (21); and
- apart from mutual engagement into disengagement to disassemble the rear face (11) from the front face (21) .

5. The machine of any preceding claim, wherein the rear hook (12) is recessed in the rear face (11) and the front hook (22) projects out of the front face (21), or vice versa.

6. The machine of any preceding claim, wherein the module (20,30) comprises:
- a main module (30) bearing the outlet (31); and
- a service unit (20) having a unit face (211) that is part of said front face (21),
the main module (30) having a seat (38) into which the service unit (20) is insertable and from which the service unit (20) is removable, e.g. for emptying or filling or cleaning the unit (20), the unit face (211) bearing the front hook (22), optionally:
- the outlet (31) extending from an outlet face (210) that is part of said front face (21) such as an outlet face (210) that is generally flush with the unit face (211) when the unit (20) is in the module seat (38); and/or
- the module seat (38) forming a cavity in the main module (30) for receiving the service unit (20).

7. The machine of claim 6, wherein the service unit (20) is arranged to be removed from the module seat (38) by pulling the cup support (10) when assembled to the front face (21).

8. The machine of claim 6 or 7 wherein the front hook (22) forms a grip (221,222) for removing the service unit (20) from the module seat (38), such as a grip (221,222) generally extending:
a) along a u- or v-shape (22',22'');
b) along a virtual plane that is offset and parallel to the unit face (211);
c) about at least part of a seizure cavity (223) such as a seizure cavity delimited by a bottom (224) that is recessed relative to the unit face (211); or
d) according to a combination of at least two of features a) to c).

9. The machine of claim 8, wherein the grip (221,222) comprises an edge (222) that extends in a direction that is generally opposite to the retaining element (221) of the front hook (22).

10. The machine of any one of claims 6 to 9, wherein the service unit (20) comprises:
- a liquid tank for supplying liquid that is circulated towards the outlet (31) by the preparation module (20,30); and/or
- a waste collector (23,24), such as a collector comprising at least one of:
- a cavity (23) for collecting solid waste material e.g. a used ingredient; and
- a cavity (24) for collecting liquid waste material e.g. residual beverage and/or liquid draining from the main module (30).

11. The machine of any preceding claim, wherein the cup support (10) comprises a liquid collection receptacle (14) supporting a removable cup placement platform (16), optionally the placement platform having at least one through-passage (17) for evacuating liquid to the collection receptacle (14) from above the platform (16) when placed above the receptacle (14), optionally the liquid collection receptacle (14) comprising said rear face (11) and said rear hook (12).

12. The machine of claim 11, wherein the platform (16) has a peripheral part (18) and the collection receptacle (14) is delimited by at least one upright peripheral sidewall (15) forming a seat (15') for placing the platform (16), the peripheral part (18) extending over and above the peripheral sidewall (15) when the platform (16) is placed in the seat (15') so that the platform (16) is seizable at the peripheral part (18) adjacent the peripheral sidewall (15) by a user-hand for removing the platform (16) from the receptacle (14), optionally the peripheral part (18) extending over and above and beyond the peripheral sidewall (15).

13. The machine of claim 12, wherein the peripheral part (18) comprises:
- at least two seizable edges (18',18'';18''',18'''') that are located generally opposite to one another across the platform (16); or
- one or more seizable edges (18',18'',18''',18'''') that extend around the entire platform (16).

14. The machine of claim 12 or 13, wherein the receptacle (14) and the platform (16) have an arrangement for fastening the receptacle and the platform together, such as at least one of:
- a magnetic fastener, e.g. the receptacle having one or more permanent magnets and the platform comprising a ferromagnetic material or vice versa, alternatively both the receptacle and the platform being fitted with permanent magnets;
- a friction fastener, e.g. the peripheral sidewall (15) forming a rim and the peripheral part (18) having one or more lower edges extending inside and/or outside the peripheral rim and tightening the peripheral part (18) to the sidewall by friction;
- a screw fastener, e.g. the platform (16) forming a screw cap on the receptacle (14);
- a hook fastener; and
- a bayonet fastener.

15. The machine of claim 14, wherein the peripheral part (18) has a lower edge forming a hook (19) and the upright peripheral sidewall (15) has an upper edge forming a hook (15'), the lower edge hook (19) and the upper edge hook (15') being hooked together when the platform is placed in the seat (15'), optionally:
- the peripheral sidewall (15) having a plurality of spaced apart hooks (15') and the peripheral part (18) having a plurality of spaced apart hooks (19), the hooks (15',19) being hooked together when the platform is placed in the seat (15'); and/or
- the peripheral sidewall (15) forming a rim into which or around which the hook (19) of the peripheral part (13) extends for being hooked to the upper edge hook (15'), the hooks (15',19) being arranged to be unhooked by urging the lower edge of the peripheral part (18) towards a middle part of the platform (16) or by urging the peripheral sidewall towards a middle part of the receptacle, optionally the lower edge of the peripheral part (18) extending downwardly from the platform (16) and/or upwardly from the rim when the hooks (15',19) are hooked together.

## Patentansprüche

1. Getränkezubereitungsmaschine (1), umfassend:
- ein Getränkezubereitungsmodul (20, 30) mit einer Stirnfläche(21) mit einem Auslass (31) zur Abgabe eines zubereiteten Getränks, wobei wahlweise das Modul (20, 30) konfiguriert ist, eine Flüssigkeit, z. B. Wasser, aus einem Flüssigkeitsbehälter (35) zum Auslass (31) zu zirkulieren, wie beispielsweise ein Modul (20, 30), das mindestens einen von einem Flüssigkeitsantrieb, einem thermischen Aufbereiter und einem Getränkemischhohlraum umfasst, z. B. eine durch einen Aktuator (32) gesteuerte Kammer zum Aufnehmen eine Getränkezutat, z. B. einer Zutat, die in einer Kapsel über einen Zutatendurchgang (33) bereitgestellt wird, und zum Mischen der Zutat mit der Flüssigkeit zum Zubereiten des Getränks, wie beispielsweise ein Modul (20, 30), das mit einem externen Gehäuse (34) und/oder einer Benutzerschnittstelle (36) bereitgestellt ist; und
- einen Becherhalter (10), der sich unter dem Auslass (31) befindet, um einen Becher (2) unter dem Auslass (31) zu platzieren, wobei wahlweise der Becherhalter (10) von unter dem Auslass (31) entfernt werden kann, um eine Platzierung auf einer Platzierungsoberfläche (4) vor der Stirnfläche (21) unter dem Auslass (31) einer Tasse (3) zu ermöglichen, die größer als der Becher (2) ist, wie beispielsweise eine Platzierungsfläche (4), die durch einen Halter (40) außerhalb der Maschine (1) oder durch einen Fuß der Maschine gebildet ist, z. B. einen Fuß, der sich unter dem Becherhalter (10) erstreckt, wenn er sich unter dem Auslass (31) befindet,
wobei der Becherhalter (10) eine Rückfläche (11) aufweist, die entfernbar an der Stirnfläche (21) durch eine mechanische Verbinderanordnung (12, 22) montiert ist, die einen vorderen Haken (22) an der Stirnfläche (21) umfasst, der von einem entsprechenden hinteren Haken (12) an der Rückfläche (11) demontierbar ist, wobei der hintere Haken (12) ein Rückhalteelement (121) aufweist und der vordere Haken (22) ein Rückhalteelement (221) aufweist, wobei die Rückhalteelemente (121, 221) gegenseitig in Eingriff sind, wenn der Becherhalter (10) an der Stirnfläche (21) montiert ist, und außer Eingriff sind, wenn der Becherhalter (10) von der Stirnfläche (21) demontiert ist,
**dadurch gekennzeichnet, dass** sich der hintere Haken (12) mit seinem Rückhalteelement (121) im Allgemeinen im Querschnitt entlang zweier konvergierender Richtungen (12', 12") erstreckt und sich der vordere Haken (22) mit seinem Rückhalteelement (221) im Allgemeinen im Querschnitt entlang zweier entsprechender konvergierender Richtungen (22', 22") erstreckt, um das Selbstanordnen des hinteren Hakens (12) in Bezug auf den vorderen Haken (22) zu erleichtern, wenn der Becherhalter (10) an der Stirnfläche (21) montiert wird.

2. Maschine nach Anspruch 1, wobei die konvergierenden Richtungen (12', 12", 22', 22") wie folgt sind:
- aufwärts konvergierend oder seitwärts konvergierend, wie beispielsweise aufwärts oder seitwärts konvergierend, um eine vertikale oder horizontale Montage und Demontage des Becherhalters (10) und der Stirnfläche (21) zu ermöglichen; und/oder
- innerhalb gerader oder gekrümmter virtueller Ebenen konvergierend, wobei jede der zwei Richtungen (12', 12"; 22', 22") in einer solchen geraden oder gekrümmten virtuellen Ebene enthalten ist, wobei die Ebenen wahlweise im Allgemeinen aufrecht oder in einem Winkel dazu stehen.

3. Maschine nach Anspruch 1 oder 2, wobei die konvergierenden Richtungen (12', 12", 22', 22") gerade und/oder gebogen sind, wobei jeweils zwei konvergierende Richtungen (12', 12", 22', 22") des hinteren Hakens (12) und des vorderen Hakens (22), die wahlweise in einer allgemein symmetrischen oder asymmetrischen u- oder v-Anordnung, wie beispielsweise einer im Allgemeinen halbkreisförmigen Anordnung, einer halb-elliptischen Anordnung oder einer Anordnung von zwei Abfangbogensegmenten, die im Allgemeinen einen gotischen Bogen bilden, angeordnet sind.

4. Maschine nach einem der vorstehenden Ansprüche, wobei sich das Rückhalteelement (121) des hinteren Hakens (12) im Allgemeinen parallel zur Rückfläche (12) erstreckt und wobei sich das Rückhalteelement (221) des vorderen Hakens (22) im Allgemeinen parallel zur Stirnfläche (21) erstreckt, so dass die Rückfläche (11) und die Stirnfläche (21) relativ parallel übereinander geschoben werden, um die Rückhalteelemente (121, 221) wie folgt zu bewegen:
- zusammen, aus dem Außereingriffbringen in den gegenseitigen Eingriff, um die Rückfläche (11) an der Stirnfläche (21) zu montieren; und
- voneinander weg, aus dem gegenseitigen Eingriff in das Außereingriffbringen, um die Rückfläche (11) von der Stirnfläche (21) zu demontieren.

5. Maschine nach einem der vorstehenden Ansprüche, wobei der hintere Haken (12) in die Rückfläche (11) vertieft ist und der vordere Haken (22) aus der Stirnfläche (21) herausragt, oder umgekehrt.

6. Maschine nach einem der vorstehenden Ansprüche, wobei das Modul (20, 30) Folgendes umfasst:
- ein Hauptmodul (30), das den Auslass (31) trägt; und
- eine Bedienungseinheit (20) mit einer Einheitsfläche (211), die Teil der Stirnfläche (21) ist,
wobei das Hauptmodul (30) einen Sitz (38) aufweist, in den die Bedienungseinheit (20) einsetzbar ist und aus dem die Bedienungseinheit (20) entfernbar ist, z. B. zum Entleeren oder Befüllen oder Reinigen der Einheit (20), wobei die Einheitsfläche (211) den vorderen Haken (22) trägt, wobei wahlweise:
- der Auslass (31) sich von einer Auslassfläche (210) erstreckt, die Teil der Stirnfläche (21) ist, wie beispielsweise einer Auslassfläche (210), die im Allgemeinen bündig mit der Einheitsfläche (211) ist, wenn sich die Einheit (20) im Modulsitz befindet (38); und/oder
- der Modulsitz (38) einen Hohlraum im Hauptmodul (30) zum Aufnehmen der Bedienungseinheit (20) bildet.

7. Maschine nach Anspruch 6, wobei die Bedienungseinheit (20) angeordnet ist, um vom Modulsitz (38) durch Ziehen des Becherhalters (10) entfernt zu werden, wenn sie an der Stirnfläche (21) montiert ist.

8. Maschine nach Anspruch 6 oder 7, wobei der vordere Haken (22) einen Griff (221, 222) zum Entfernen der Bedienungseinheit (20) vom Modulsitz (38) bildet, wie beispielsweise ein Griff (221, 222), der sich im Allgemeinen wie folgt erstreckt:
a) entlang einer u- oder v-Form (22', 22");
b) entlang einer virtuellen Ebene, die versetzt und parallel zur Einheitsfläche (211) ist;
c) um mindestens einen Teil eines Aufnahmehohlraums (223), wie beispielsweise eines Aufnahmehohlraums, der durch einen Boden (224) begrenzt ist, der in Bezug auf die Einheitsfläche (211) vertieft ist; oder
d) gemäß einer beliebigen Kombination von mindestens zwei der Merkmale a) bis c).

9. Maschine nach Anspruch 8, wobei der Griff (221, 222) einen Rand (222) umfasst, der sich in eine Richtung erstreckt, die im Allgemeinen dem Rückhalteelement (221) des vorderen Hakens (22) entgegengesetzt ist.

10. Maschine nach einem der Ansprüche 6 bis 9, wobei die Bedienungseinheit (20) Folgendes umfasst:
- einen Flüssigkeitstank zum Zuführen von Flüssigkeit, die durch das Zubereitungsmodul (20, 30) in Richtung des Auslasses (31) geleitet wird; und/oder
- einen Abfallsammler (23, 24), wie beispielsweise einen Kollektor, der mindestens eines von Folgendem umfasst:
- einen Hohlraum (23) zum Sammeln von festem Abfallmaterial, z. B. einer verbrauchten Zutat; und
- einen Hohlraum (24) zum Sammeln von flüssigem Abfallmaterial, z. B. aus dem Hauptmodul (30) ablaufendes Restgetränk und/oder -flüssigkeit.

11. Maschine nach einem der vorstehenden Ansprüche, wobei der Becherhalter (10) einen Flüssigkeitssammelbehälter (14) umfasst, der eine entfernbare Becherplatzierungsplattform (16) abstützt, wobei die Platzierungsplattform wahlweise mindestens einen Durchlass (17) zum Ableiten von Flüssigkeit in den Sammelbehälter (14) von oberhalb der Plattform (16) aufweist, wenn sie über dem Behälter (14) platziert ist, wobei wahlweise der Flüssigkeitssammelbehälter (14) die Rückfläche (11) und den hinteren Haken (12) umfasst.

12. Maschine nach Anspruch 11, wobei die Plattform (16) ein Umfangsteil (18) aufweist und der Sammelbehälter (14) durch mindestens eine aufrechte Umfangsseitenwand (15) begrenzt ist, die einen Sitz (15') zum Platzieren der Plattform (16) bildet, wobei sich das Umfangsteil (18) über und oberhalb der Umfangsseitenwand (15) erstreckt, wenn die Plattform (16) im Sitz (15') platziert ist, so dass die Plattform (16) am Umfangsteil (18) angrenzend an die Umfangsseitenwand (15) von einer Benutzerhand zum Entfernen der Plattform (16) aus dem Sammelbehälter (14) aufnehmbar ist, wobei sich wahlweise das Umfangsteil (18) über und oberhalb und über die Umfangsseitenwand (15) hinaus erstreckt.

13. Maschine nach Anspruch 12, wobei das Umfangsteil (18) Folgendes umfasst:
- mindestens zwei aufnehmbare Ränder (18', 18"; 18''', 18""), die sich über die Plattform (16) im Allgemeinen gegenüberliegend befinden; oder
- einen oder mehrere aufnehmbare Ränder (18', 18", 18''', 18""), die sich um die gesamte Plattform herum erstrecken (16).

14. Maschine nach Anspruch 12 oder 13, wobei der Sammelbehälter (14) und die Plattform (16) eine Anordnung zur Befestigung des Sammelbehälters und der Plattform miteinander aufweisen, wie beispielsweise mindestens eines der Folgenden:
- ein magnetisches Befestigungsmittel, z. B. der Sammelbehälter einen oder mehrere Permanentmagneten aufweist und die Plattform ein ferromagnetisches Material umfasst oder umgekehrt, wobei alternativ sowohl der Sammelbehälter als auch die Plattform mit Permanentmagneten ausgestattet sind;
- Reibungsbefestigungsmittel, z. B. die Umfangsseitenwand (15) einen Kranz bildet und das Umfangsteil (18) einen oder mehrere untere Ränder aufweist, die sich innerhalb und/oder außerhalb des Umfangskranzes erstrecken und das Umfangsteil (18) durch Reibung an der Seitenwand festziehen;
- ein Schraubbefestigungsmittel, z. B. die Plattform (16), die eine Schraubkappe auf dem Sammelbehälter (14) bildet;
- ein Hakenbefestigungsmittel; und
- ein Bajonettbefestigungsmittel.

15. Maschine nach Anspruch 14, wobei das Umfangsteil (18) einen unteren Rand aufweist, der einen Haken bildet (19) und die aufrechte Umfangsseitenwand (15) einen oberen Rand aufweist, der einen Haken bildet (15'), wobei der Unterrandhaken (19) und der Oberrandhaken (15') miteinander verhakt sind, wenn die Plattform in dem Sitz (15') platziert ist, wobei wahlweise:
- die Umfangsseitenwand (15) eine Vielzahl von voneinander beabstandeten Haken (15') aufweist und das Umfangsteil (18) eine Vielzahl von voneinander beabstandeten Haken (19) aufweist, wobei die Haken (15', 19) miteinander verhakt sind, wenn die Plattform in dem Sitz (15') platziert ist; und/oder
- die Umfangsseitenwand (15), die einen Kranz bildet, in den oder um den sich der Haken (19) des Umfangsteils (13) erstreckt, um am Oberrandhaken (15') verhakt zu werden, wobei die Haken (15', 19) angeordnet sind, um durch Drücken des unteren Randes des Umfangsteils (18) zu einem Mittelteil der Plattform (16) oder durch Drücken der Umfangsseitenwand zu einem Mittelteil des Sammelbehälterss ausgehakt zu werden, wobei sich wahlweise der untere Rand des Umfangsteils (18) von der Plattform (16) abwärts und/oder von dem Kranz aufwärts erstreckt, wenn die Haken (15',19) miteinander verhakt sind.

## Revendications

1. Machine de préparation de boisson (1) comprenant :
- un module de préparation de boisson (20, 30) ayant une face avant (21) avec une sortie (31) pour distribuer une boisson préparée, éventuellement le module (20, 30) étant conçu pour faire circuler un liquide par ex. de l'eau à partir d'un réservoir à liquide (35) jusqu'à la sortie (31), tel qu'un module (20, 30) comprenant au moins un d'un dispositif d'entraînement de liquide, d'un conditionneur thermique de boisson et d'une cavité de mélange de boisson par ex. une chambre commandée par un actionneur (32) pour recevoir un ingrédient de boisson, par ex. un ingrédient fourni au sein d'une capsule, par l'intermédiaire d'un passage d'ingrédient (33) et pour mélanger ledit ingrédient avec ledit liquide pour préparer ladite boisson, tel qu'un module (20, 30) pourvu d'un logement externe (34) et/ou d'une interface utilisateur (36) ; et
- un support de tasse (10) situé sous la sortie (31) pour placer une tasse (2) sous la sortie (31), éventuellement le support de tasse (10) étant amovible de sous la sortie (31) pour permettre une mise en place sur une surface de placement (4) devant la face avant (21) sous la sortie (31) d'une grande tasse (3) qui est plus grande que ladite tasse (2), telle qu'une surface de positionnement (4) qui est formée par un support (40) externe à ladite machine (1) ou par un pied de ladite machine, par ex. un pied s'étendant sous le support de tasse (10) lorsqu'il est située sous la sortie (31),
le support de tasse (10) comportant une face arrière (11) assemblée de façon amovible à la face avant (21) par un agencement de raccord mécanique (12, 22) qui comprend un crochet avant (22) sur la face avant (21) pouvant être démonté d'un crochet arrière (12) correspondant sur la face arrière (11), le crochet arrière (12) comportant un élément de retenue (121) et le crochet avant (22) ayant un élément de retenue (221), les éléments de retenue (121, 221) étant mutuellement en prise lorsque le support de tasse (10) est assemblé à la face avant (21) et libérés lorsque le support de tasse (10) est démonté de la face avant (21),
**caractérisé en ce que** le crochet arrière (12) avec son élément de retenue (121) s'étend généralement en section transversale le long de deux directions convergentes (12', 12") et le crochet avant (22) avec son élément de retenue (221) s'étendent généralement en coupe transversale le long de deux directions convergentes de manière correspondante (22', 22"), de manière à faciliter le positionnement automatique du crochet arrière (12) par rapport au crochet avant (22) lorsque le support de tasse (10) est assemblé à la face avant (21).

2. Machine selon la revendication 1, dans laquelle les directions convergentes (12', 12", 22', 22") sont :
- convergentes vers le haut ou convergentes latéralement, tel que convergentes vers le haut ou latéralement pour permettre un assemblage et un démontage verticaux ou horizontaux du support de tasse (10) et de la face avant (21) ; et/ou
- convergentes dans des plans virtuels droits ou courbes, chacune desdites deux directions (12', 12" ;22', 22") étant contenue dans un tel plan virtuel droit ou courbe, les plans étant éventuellement généralement verticaux ou à un angle par rapport à celui-ci.

3. Machine selon la revendication 1 ou 2, dans laquelle les directions convergentes (12', 12", 22', 22") sont droites et/ou arquée, chacune des deux directions convergentes (12', 12", 22', 22") du crochet arrière (12) et du crochet avant (22) étant facultativement dans un agencement généralement symétrique ou asymétrique en U ou en V, tel qu'un agencement généralement semi circulaires, un agencement semi elliptique ou un agencement de deux segments d'arc se croisant formant généralement un arc gothique.

4. Machine selon une quelconque revendication précédente, dans lequel l'élément de retenue (121) du crochet arrière (12) s'étend généralement en parallèle à la face arrière (12) et dans lequel l'élément de retenue (221) du crochet avant (22) s'étend généralement en parallèle à la face avant (21), de sorte que la face arrière (11) et la face avant (21) soient glissées l'une par rapport à l'autre en parallèle l'une sur l'autre pour déplacer les éléments de retenue (121, 221) :
- l'un vers l'autre du désengagement en engagement mutuel pour assembler la face arrière (11) à la face avant (21) ; et
- l'un à l'opposé de l'autre de l'engagement mutuel en désengagement pour démonter la face arrière (11) de la face avant (21).

5. Machine selon une quelconque revendication précédente, dans laquelle le crochet arrière (12) est évidé dans la face arrière (11) et le crochet avant (22) fait saillie à partir de la face avant (21), ou inversement.

6. Machine selon une quelconque revendication précédente, dans laquelle le module (20, 30) comprend :
- un module principal (30) portant la sortie (31) ; et
- une unité de service (20) ayant une face d'unité (211) qui fait partie de ladite face avant (21),
le module principal (30) possédant un siège (38) dans lequel l'unité de service (20) peut être insérée et à partir duquel l'unité de service (20) est amovible, par ex. pour vider ou remplir ou nettoyer l'unité (20), la face d'unité (211) portant le crochet avant (22), éventuellement :
- la sortie (31) s'étendant à partir d'une face de sortie (210) qui fait partie de ladite face avant (21) comme une face de sortie (210) qui est généralement alignée avec la face d'unité (211) lorsque l'unité (20) est dans le siège de module (38) ; et/ou
- le siège de module (38) formant une cavité dans le module principal (30) pour recevoir l'unité de service (20).

7. Machine selon la revendication 6, dans laquelle l'unité de service (20) est arrangée pour être retirée du siège de module (38) en tirant le support de tasse (10) lorsqu'il est assemblé à la face avant (21).

8. Machine selon la revendication 6 ou 7 dans laquelle le crochet avant (22) forme une poignée (221, 222) pour retirer l'unité de service (20) du siège de module (38), telle qu'une poignée (221 222) s'étendant généralement :
a) le long d'une forme en U ou en V (22', 22") ;
b) le long d'un plan virtuel décalé et parallèle à la face d'unité (211) ;
c) autour d'au moins une partie d'une cavité de capture (223) telle qu'une cavité de capture délimitée par un fond (224) qui est en retrait par rapport à la face d'unité (211) ; ou
d) selon une combinaison d'au moins deux des caractéristiques a) à c).

9. Machine selon la revendication 8, dans laquelle la poignée (221, 222) comprend un bord (222) qui s'étend dans une direction qui est généralement opposée à l'élément de retenue (221) du crochet avant (22).

10. Machine selon l'une quelconque des revendications 6 à 9, dans laquelle l'unité de service (20) comprend :
- un réservoir de liquide pour fournir du liquide qui est amené à circuler vers la sortie (31) par le module de préparation (20, 30) ; et/ou
- un collecteur de déchets (23, 24), tel qu'un collecteur comprenant au moins l'un de :
- une cavité (23) pour collecter un matériau de déchet solide par ex. un ingrédient utilisé ; et
- une cavité (24) pour collecter un matériau de déchet liquide par ex. la boisson résiduelle et/ou le liquide résiduel vidangé depuis le module principal (30).

11. Machine selon une quelconque revendication précédente, dans laquelle le support de tasse (10) comprend un réceptacle de collecte de liquide (14) supportant une plateforme de placement de tasse amovible (16), éventuellement la plateforme de placement ayant au moins un passage traversant (17) pour évacuer le liquide vers le réceptacle de collecte (14) depuis le dessus de la plateforme (16) lorsqu'elle est placée au-dessus du réceptacle (14), éventuellement le réceptacle de collecte de liquide (14) comprenant ladite face arrière (11) et ledit crochet arrière (12).

12. Machine selon la revendication 11, dans laquelle la plateforme (16) a une partie périphérique (18) et le récipient de collecte (14) est délimité par au moins une paroi latérale périphérique verticale (15) formant un siège (15') pour placer la plateforme (16), la partie périphérique (18) s'étendant sur et au-dessus de la paroi latérale périphérique (15) lorsque la plateforme (16) est placée dans le siège (15') de telle sorte que la plateforme (16) puisse être capturée au niveau de la partie périphérique (18) adjacente à la paroi latérale périphérique (15) par la main d'un utilisateur pour retirer la plateforme (16) du réceptacle (14), éventuellement la partie périphérique (18) s'étendant sur et au-dessus et au-delà de la paroi latérale périphérique (15).

13. Machine selon la revendication 12, dans laquelle la partie périphérique (18) comprend :
- au moins deux bords saisissables (18', 18";18''', 18"") qui sont situés généralement opposés l'un à l'autre à travers la plateforme (16) ; ou
- un ou plusieurs bords saisissables (18',18",18''',18'''') qui s'étendent autour de toute la plateforme (16).

14. Machine selon la revendication 12 ou 13, dans laquelle le réceptacle (14) et la plateforme (16) ont un agencement permettant de fixer le réceptacle et la plateforme ensemble, tel qu'au moins l'un parmi :
- un élément de fixation magnétique, par ex. le réceptacle ayant un ou plusieurs aimants permanents et la plateforme comprenant un matériau ferromagnétique ou inversement, en variante à la fois le réceptacle et la plateforme étant munis d'aimants permanents ;
- un élément de fixation à friction, par ex. la paroi latérale périphérique (15) formant un rebord et la partie périphérique (18) ayant un ou plusieurs bords inférieurs s'étendant à l'intérieur et/ou à l'extérieur du rebord périphérique et serrant la partie périphérique (18) à la paroi latérale par friction ;
- un élément de fixation à vis, par ex. la plateforme (16) formant un capuchon à vis sur le réceptacle (14) ;
- un élément de fixation à crochets ; et
- un élément de fixation à baïonnette.

15. Machine selon la revendication 14, dans laquelle la partie périphérique (18) a un bord inférieur formant un crochet (19) et la paroi latérale périphérique verticale (15) a un bord supérieur formant un crochet (15'), le crochet de bord inférieur (19) et le crochet de bord supérieur (15') étant accrochés ensemble lorsque la plateforme est placée dans le siège (15'), éventuellement :
- la paroi latérale périphérique (15) ayant une pluralité de crochets espacés (15') et la partie périphérique (18) ayant une pluralité de crochets espacés (19), les crochets (15', 19) étant accrochés ensemble lorsque la plateforme est placée dans le siège (15') ; et/ou
- la paroi latérale périphérique (15) formant un rebord dans lequel ou autour duquel le crochet (19) de la partie périphérique (13) s'étend pour être accroché au crochet de bord supérieur (15'), les crochets (15', 19) étant disposés pour être décrochés par pressage du bord inférieur de la partie périphérique (18) vers une partie centrale de la plateforme (16) ou en pressant la paroi latérale périphérique vers une partie centrale du réceptacle, éventuellement le bord inférieur de la partie périphérique (18) s'étendant vers le bas à partir de la plateforme (16) et/ou vers le haut à partir du rebord lorsque les crochets (15', 19) sont accrochés ensemble.
